# FASCICULE DE BREVET EUROPEEN

(11) **EP 2 782 733 B1**
(45) Date de publication et mention de la délivrance du brevet: **13.04.2016**
(21) Numéro de dépôt: 12799099.2
(22) Date de dépôt: 23.11.2012
(51) Int. Cl.: B29C 33/10, B29C 33/42, B29D 30/06, B60C 11/13

(54) **MOULE COMPORTANT UNE CAVITE POUR LE MOULAGE D'UN DISPOSITIF DE FERMETURE DANS UNE RAINURE DE PNEU**
FORM MIT EINEM HOHLRAUM ZUR FORMUNG EINER VERSCHLUSSVORRICHTUNG IN EINER REIFENNUT
MOULD COMPRISING A CAVITY FOR MOULDING A CLOSING OFF DEVICE IN A TYRE GROOVE

(30) Priorité: 25.11.2011 FR 1160776
(43) Date de publication de la demande: 01.10.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: CHADES, Wilfried, 63040 Clermont-Ferrand Cedex 9 (FR); BARRIERE, Richard, 63040 Clermont-Ferrand Cedex 9 (FR); VILLENEUVE, Bernard, 63040 Clermont-Ferrand Cedex 9 (FR)
(74) Mandataire: Demaure, Pierre-Yves
(86) Numéro de dépôt international: PCT/EP2012/073437
(87) Numéro de publication internationale: WO 2013/076235

(56) Documents cités:
- EP-A1- 1 557 250
- WO-A1-2010/146180
- DE-T2- 60 008 156
- JP-A- 4 353 432
- JP-A- 8 025 365
- JP-A- 8 072 061
- JP-A- 2000 343 916
- KR-B1- 100 694 179

## Description

### DOMAINE DE L'INVENTION

La présente invention concerne le domaine de la fabrication d'un moule pour pneumatique comportant une pluralité de cavités aptes à mouler des dispositifs de fermeture dans une ou plusieurs rainure(s) de ce pneumatique. Plus particulièrement, l'invention concerne la fabrication d'un moule formé à partir d'une pluralité d'éléments moulants.

### ETAT DE LA TECHNIQUE

Il est connu du document WO 2010146180 un moule de vulcanisation pour pneumatique comprenant une pluralité d'éléments moulants. Chaque élément moulant est délimité par deux bords de contact avec deux autres éléments moulants adjacents de sorte qu'une fois les éléments moulants au contact les uns contre les autres, l'ensemble de ces éléments moulants permet le moulage de tout ou partie de la bande de roulement du pneumatique.

Chaque élément moulant comprend une embase ainsi qu'un cordon faisant saillie à partir de cette embase. L'embase est destinée à mouler la surface de roulement de la bande de roulement du pneumatique et le cordon est destiné à mouler une rainure dans la bande de roulement de ce pneumatique, c'est-à-dire une découpure dont la largeur est supérieure ou égale à 2 mm.

Il est connu que dans la zone de contact de la bande de roulement avec la chaussée, chaque rainure forme avec cette chaussée un tuyau de résonance. Ce tuyau de résonance amplifie les bruits de roulage du pneumatique, ce qui peut être désagréable pour des personnes situées à l'intérieur du véhicule et/ou à l'extérieur de ce véhicule.

Afin de limiter l'intensité de ces bruits de résonance, il est connu de pourvoir les rainures avec des dispositifs de fermeture particuliers, également appelés « parois flexibles », « flaps » ou « clapets ». Ces dispositifs de fermeture se présentent sous la forme de lames de faible épaisseur. Ces lames ferment partiellement la section transversale des rainures lorsque le pneumatique roule sur une chaussée sèche. Dans le cas d'un roulage sur une chaussée humide, les lames fléchissent sous l'action du flux de l'eau, de sorte que l'évacuation de cette eau hors de la zone de contact du pneumatique avec la chaussée est possible. L'adhérence du pneumatique sur la chaussée est alors maintenue même lors d'un roulage dans des conditions sévères d'humidité. Un tel exemple de dispositif de fermeture est notamment connu du document WO 2010063749.

Pour mouler ces dispositifs de fermeture, le document WO 2010146180 divulgue un élément moulant comportant un cordon pourvu de logements adaptés pour recevoir des inserts, chaque insert comportant une cavité de moulage d'un dispositif de fermeture. Le cordon de l'élément moulant est donc discontinu car entrecoupé par les logements recevant les inserts.

Le document JP2000343916 décrit également un élément pour un moule de vulcanisation d'une bande de roulement d'un pneumatique. L'élément moulant comporte une embase apte à mouler une partie de la surface de roulement de la bande de roulement et un cordon apte à mouler une rainure dans la bande de roulement.

Pour certains types de pneumatiques tels que des pneumatiques pour roulages hivernaux, il est connu de pourvoir la bande de roulement d'incisions. Par incision, on entend une découpure dont la largeur est inférieure à 2 mm. Ces incisions sont moulées par des lamelles faisant saillie à partir de l'embase de l'élément moulant. Afin d'améliorer la résistance mécanique de ces lamelles, il est généralement prévu que celles-ci soient venues de matière avec le cordon de l'élément moulant, c'est-à-dire que les lamelles et le cordon sont réalisés en même temps au cours d'une même opération de moulage. Or les inserts sont fabriqués lors d'une étape qui est différente de l'étape de moulage des lamelles et du cordon. Ainsi, dans le cas où l'on souhaite placer des lamelles au droit d'inserts, par exemple du fait d'une conception particulière de la bande de roulement, il est nécessaire de recourir à une étape supplémentaire de soudure de ces lamelles avec les inserts. Ceci entraîne alors des surcoûts de fabrication.

L'invention a donc pour but d'améliorer la résistance mécanique globale d'un moule formé de plusieurs éléments moulants et comportant des cavités de moulage de dispositifs de fermeture, tout en optimisant les coûts de fabrication de ce moule.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « moule », on entend un ensemble d'éléments moulants séparés qui, par rapprochement relatif, permettent de délimiter un espace de moulage toroïdal.

Par « élément moulant », on entend une partie d'un moule. Un élément moulant est par exemple un segment de moule.

Par « embase », on entend la partie de l'élément moulant comportant une surface de moulage apte à mouler la surface de roulement de la bande de roulement du pneumatique. L'embase comprend notamment des moyens de fixation destinés à fixer l'élément moulant au reste du moule.

Par « cordon », on entend une protubérance faisant saillie à partir de l'embase et dont la largeur est supérieure ou égale à 2 mm. Le cordon est destiné à mouler une rainure dans la bande de roulement du pneumatique.

Par « cavité » dans un moule, on entend un volume de creux délimité par des parois du moule. Cette cavité est apte à mouler un dispositif de fermeture dans une rainure moulée par un cordon.

Par « renfoncement » dans un cordon (« recess » en anglais), on entend un creux dans le cordon débouchant sur un bord de contact de l'élément moulant. Ce renfoncement est apte à être fermé au niveau du bord de contact de cet élément moulant par un autre élément moulant en vue de former une cavité.

Par « bord de contact » d'un élément moulant, on entend une surface de l'élément moulant destinée à entrer en contact avec un autre élément moulant pour former tout ou partie d'un moule de vulcanisation.

### RESUME DE L'INVENTION

L'invention concerne un moule pour la vulcanisation d'une bande de roulement d'un pneumatique comportant une pluralité d'éléments moulants, lesdits éléments moulants étant en contact entre eux pour former une surface de moulage apte à mouler une surface de roulement de la bande de roulement du pneumatique et au moins un cordon apte à mouler une rainure dans la bande de roulement, ledit cordon comportant deux faces longitudinales s'étendant dans la longueur du cordon en faisant saillie à partir de la surface de moulage et une face supérieure reliant lesdites faces longitudinales. Le moule comprend au moins une cavité apte à mouler un dispositif de fermeture destiné à fermer tout ou partie d'une section transversale de la rainure moulée par le cordon, ladite cavité débouchant sur la face supérieure du cordon et ne débouchant pas sur les faces longitudinales du cordon de sorte que le dispositif de fermeture moulé par la cavité est venu de matière uniquement avec le fond de la rainure. La cavité est délimitée par des parois appartenant à deux éléments moulants en contact l'un contre l'autre. Au moins un desdits éléments moulants comporte au moins un renfoncement dans le cordon, ledit renfoncement débouchant sur la face supérieure du cordon et sur un bord de contact de l'élément moulant, ledit renfoncement ne débouchant pas sur les faces longitudinales de ce cordon.

Le renfoncement formé dans l'élément moulant est destiné à être fermé par un autre élément moulant du moule pour former une cavité de moulage d'un dispositif de fermeture. L'invention permet donc de former ces cavités de moulage d'une manière simple et pratique.

En outre, comme le renfoncement formé dans l'élément moulant ne débouche pas au niveau des parois longitudinales du cordon, ce cordon n'est pas discontinu. Ainsi, il est possible de mouler des lamelles venues de matière avec le cordon et ceci quelles que soit les positions de ces lamelles par rapport au cordon.

Enfin, étant donné que le renfoncement de l'élément moulant débouche sur le bord de cet élément moulant, les parois de l'élément moulant délimitant ce renfoncement sont facilement accessibles, notamment avant l'assemblage de cet élément moulant dans le moule. Ainsi, il est possible de revêtir ces parois avec un revêtement anti-adhérent, tel que du xylane. Par l'utilisation de ce revêtement anti-adhérent, on améliore le démoulage des dispositifs de fermeture.

L'invention permet donc de fabriquer d'une manière simple et pratique un moule apte à mouler des dispositifs de fermeture dans la bande de roulement d'un pneumatique.

Dans une variante de réalisation, l'élément moulant comporte dans le cordon un premier renfoncement et un second renfoncement, chacun de ces renfoncements débouchant sur la face supérieure du cordon et sur le bord de contact de l'élément moulant, aucune de ces renfoncements ne débouchant sur les faces longitudinales de ce cordon.

On peut ainsi mouler dans une même rainure deux dispositifs de fermeture appartenant à un même plan transversal, ces deux dispositifs de fermeture étant fixés dans le fond de la rainure. Ceci est particulièrement utile lorsque la rainure présente une largeur importante, par exemple une largeur supérieure à 15 mm. En effet, deux dispositifs de fermeture fermant chacun la moitié de la largeur de la rainure présentent globalement une plus grande flexibilité par rapport à un seul dispositif s'étendant sur toute la largeur de cette rainure. Ces deux dispositifs de fermeture présentent alors une bonne capacité pour fléchir en cas de roulage sur une chaussée humide. On optimise ainsi l'évacuation de l'eau hors de la zone de contact de la bande de roulement avec la chaussée.

Dans une variante de réalisation, l'élément moulant comporte un canal d'évacuation d'air, ledit canal d'évacuation prolongeant le renfoncement ou chaque renfoncement dans toute l'épaisseur de l'embase.

On assure ainsi une bonne évacuation de l'air emprisonné dans le ou les renfoncements lors de la vulcanisation du pneumatique.

Dans une variante de réalisation, l'élément moulant comporte des moyens de réglage des dimensions du canal d'évacuation d'air.

On s'assure ainsi que l'air est bien évacué lors de la vulcanisation du pneumatique tout en empêchant un échappement de la gomme par le canal d'évacuation. On évite ainsi qu'un surplus de gomme moulé par le canal d'évacuation ne vienne se former sur la partie supérieure du dispositif de fermeture. En effet, un tel surplus de gomme pourrait nuire au bon fonctionnement de ce dispositif de fermeture.

Dans une variante de réalisation, l'élément moulant comprend des moyens de réglage de la hauteur du renfoncement ou de chaque renfoncement dans le cordon.

Lors du refroidissement du pneumatique une fois celui-ci moulé, il se peut que le dispositif de fermeture se rétracte ce qui modifie sa hauteur dans la rainure du pneumatique. L'importance de ce phénomène de rétractation est difficilement quantifiable. En effet, ce phénomène dépend de nombreux facteurs tels que le volume de gomme formant le dispositif de fermeture, les conditions de température de la vulcanisation, la composition de gomme utilisée. Afin de donner un aspect uniforme au pneumatique, lorsque celui-ci est à l'état neuf, il est intéressant de faire venir affleurer la partie supérieure du dispositif de fermeture avec la surface de roulement de la bande de roulement. En prévoyant des moyens de réglage de la hauteur du renfoncement, il est possible d'obtenir, par des essais successifs, un dispositif de fermeture avec la hauteur qui convient pour garantir un aspect uniforme du pneumatique.

Dans une variante de réalisation, la cavité est formée par deux renfoncements en vis-à-vis, chaque renfoncement appartenant respectivement à un des deux éléments moulants en contact l'un contre l'autre.

Il est ainsi possible de fabriquer une cavité par le rapprochement de deux renfoncements appartenant à deux éléments moulants différents. Chaque renfoncement peut être formé au cours d'une opération d'emboutissage, c'est-à-dire par déformation de la matière. Comme la profondeur de chaque renfoncement est limitée, il y a donc moins de matière à déformer, l'opération d'emboutissage est alors simplifiée.

Dans une variante de réalisation, la cavité comprend un seul renfoncement appartenant à un des deux éléments moulants. Cette cavité est formée par le renfoncement et par un bord de contact appartenant à l'autre élément moulant. Ce bord de contact ferme alors le renfoncement.

Ainsi, il n'est pas nécessaire que l'autre élément moulant fermant le renfoncement comprenne lui aussi un renfoncement. Il est donc possible d'utiliser des éléments moulants standard ne présentant aucun renfoncement dans la fabrication du moule. On limite ainsi les coûts de fabrication de ce moule.

Dans une variante de réalisation, la largeur de la cavité est comprise entre 0,1 mm et 2 mm.

Il est ainsi possible de mouler des dispositifs de fermeture de faible épaisseur. Cette faible épaisseur des dispositifs de fermeture leur donne une bonne capacité de flexion lors d'un roulage sur une chaussée humide.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue partielle en perspective d'un élément moulant pour un moule conformément à un premier mode de réalisation de l'invention ;
- la **figure 2** représente schématiquement une vue en coupe de l'élément moulant de la **figure 1** **;**
- la **figure 3** représente schématiquement une vue en coupe d'un élément moulant pour un moule conformément à un second mode de réalisation de l'invention ;
- la **figure 4** représente schématiquement une vue en coupe d'un élément moulant pour un moule conformément à troisième mode de réalisation de l'invention ;
- la **figure 5** représente schématiquement une vue en coupe d'un élément moulant pour un moule conformément à un quatrième mode de réalisation de l'invention ;
- la **figure 6** représente une cavité de moulage formée à partir de deux renfoncements, chacun de ces renfoncements appartenant respectivement à un élément moulant ;
- la **figure 7** représente une cavité de moulage formée à partir d'un seul renfoncement ;
- la **figure 8** représente schématiquement une vue en perspective d'un élément moulant pour un moule conformément à un cinquième mode de réalisation de l'invention ;
- la **figure 9** représente schématiquement une vue en perspective d'un élément moulant pour un moule conformément à un sixième mode de réalisation de l'invention.

Dans la description qui va suivre, des éléments sensiblement identiques ou similaires seront désignés par des références identiques.

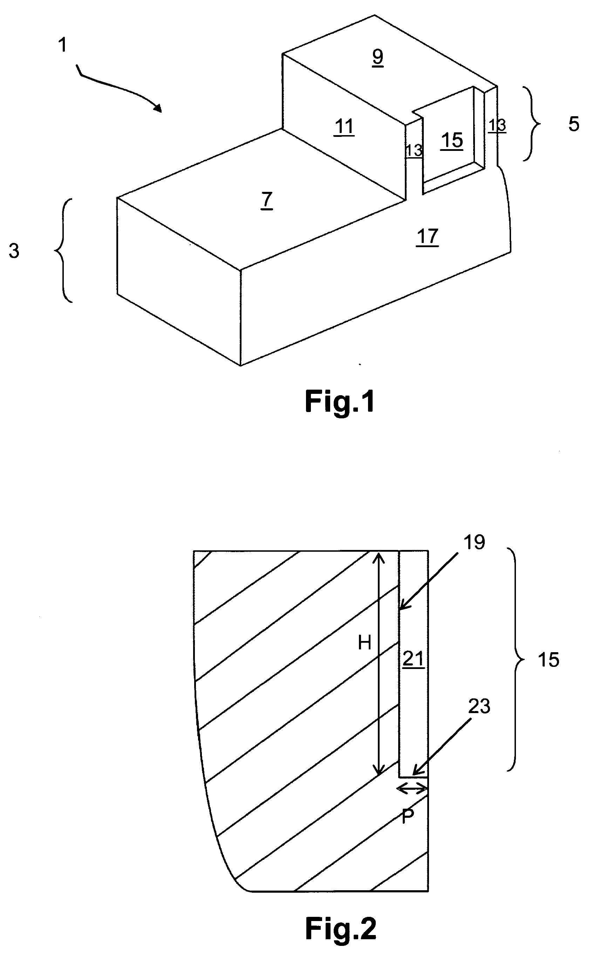

La **figure 1** représente schématiquement une vue en perspective d'un élément moulant 1 d'un moule conformément à un premier mode de réalisation de l'invention. Pour faciliter la compréhension de l'invention, aucune lamelle de moulage d'une incision n'a été représentée sur cette **figure 1****.**

L'élément moulant 1 comprend une embase 3 et un cordon 5 faisant saillie à partir de ladite embase 3. L'embase 3 et le cordon 5 sont ici venus de matière et sont formés dans un matériau de type aluminium.

Plus particulièrement, l'embase 3 comprend une surface de moulage 7 destinée à mouler une partie de la surface de roulement d'un pneumatique. Le cordon 5 comprend quant à lui une face supérieure 9 destinée à mouler le fond d'une rainure et deux faces longitudinales 11, dont une seule est ici représentée. Ces faces longitudinales 11 font saillie à partie de la surface de moulage 7 de l'embase 3.

Pour faciliter la compréhension de l'invention, le cordon 5 a été représenté ici comme formant globalement un parallélépipède rectangle. Bien entendu l'invention n'est pas limitée à cette forme particulière du cordon. En variante, la face supérieure 9 du cordon peut être non plane, par exemple bombée, de sorte que le fond de la rainure moulée par la face supérieure du cordon 5 est incurvé. De la même manière, l'angle formé par les faces longitudinales 11 avec la surface de moulage 7 de l'embase 3 peut être différent de 90°. Par exemple, chaque face longitudinale peut former un angle supérieur à 0° et inférieur ou égale à 45° avec une direction normale à la surface de moulage 7. En outre, la face supérieure du cordon peut comprendre des parties de raccordement avec les faces longitudinales 11. Ces parties de raccordement sont par exemple curvilignes de sorte qu'il est possible de limiter la présence d'angles droits entre le fond de la rainure moulé par la face supérieure du cordon et les parois longitudinales de cette rainure. Ceci permet de limiter les risques d'apparition de fissures dans la rainure.

De manière plus détaillée, le cordon 5 comporte deux protubérances 13 délimitant un renfoncement 15. Ce renfoncement est destiné à recevoir de la gomme crue pour le moulage d'un dispositif de fermeture dans une rainure d'un pneumatique. Les protubérances 13 sont ici agencées de sorte que le renfoncement 15 ne débouche pas sur les faces longitudinales 11 du cordon 5. En revanche, l'agencement de ces protubérances 13 permet au renfoncement 15 de déboucher à la fois sur la face supérieure 9 du cordon 5 et sur un bord de contact 17 de l'élément moulant 1.

La **figure 2** présente de manière plus détaillée le renfoncement 15. Le renfoncement 15 est ainsi délimité par une paroi transversale 19, par deux parois longitudinales 21, dont une seule est ici représentée, et par une paroi de fond 23. La paroi transversale 19 est ici perpendiculaire aux deux parois longitudinales 21. En variante, il est possible que la paroi transversale 19 forme un angle différent de 90° avec chacune de ces parois longitudinales 21.

On notera également que la profondeur P du renfoncement 15, c'est-à-dire la dimension de ce renfoncement dans la longueur du cordon, est ici constante et est comprise entre 0,1 mm et 1 mm. En variante, la profondeur du renfoncement 15 peut varier dans la hauteur H de ce renfoncement 15. Ceci est notamment possible lorsque la paroi transversale 19 forme un angle différent de 0° avec une direction normale à la paroi de fond 23.

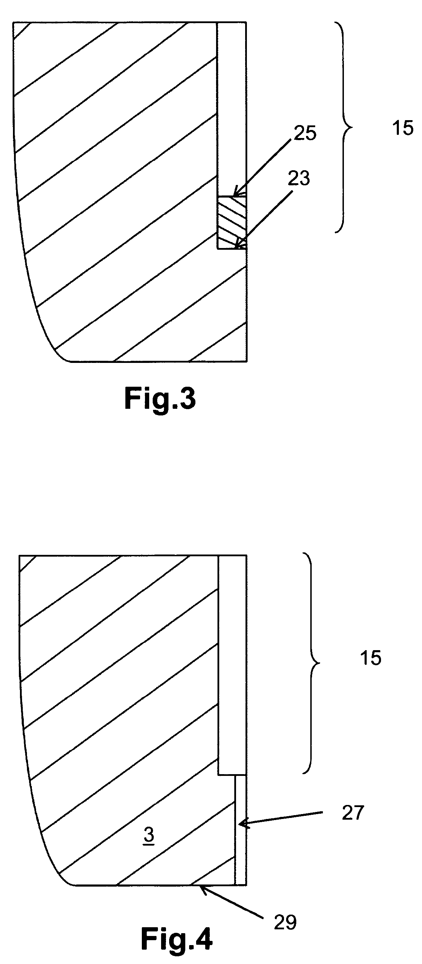

La **figure 3** présente une variante de réalisation dans laquelle on rajoute sur la surface de fond 23 une cale de réglage 25. Cette cale de réglage 25 a une épaisseur correspondant à la largeur de la surface de fond 23 et a une hauteur déterminée en fonction de la hauteur que l'on souhaite donner au dispositif de fermeture moulé par le renfoncement 15. La cale de réglage 25 peut être formée dans le même matériau que l'élément moulant et elle est fixée à cet élément moulant par collage, vissage ou tout autre moyen.

La **figure 4** présente une autre variante de réalisation dans laquelle le renfoncement 15 est prolongé dans toute l'épaisseur de l'embase 3 par un canal d'évacuation d'air 27. Ainsi, ce canal d'évacuation 27 débouche sur une surface externe 29 de l'embase. Cette surface externe 29 est apte à être en contact avec l'air au cours de l'utilisation de l'élément moulant, et plus particulièrement lorsque le moule est fermé pendant l'étape de vulcanisation. On notera que la profondeur du canal d'évacuation 27, est de l'ordre de 0,03 mm. On notera également que ce canal 27 est ici représenté comme étant débouchant sur le bord de contact 17 de l'élément moulant. En variante, le canal d'évacuation 27 peut être délimité entièrement par l'embase 3 et ne pas déboucher sur le bord de contact de l'élément moulant.

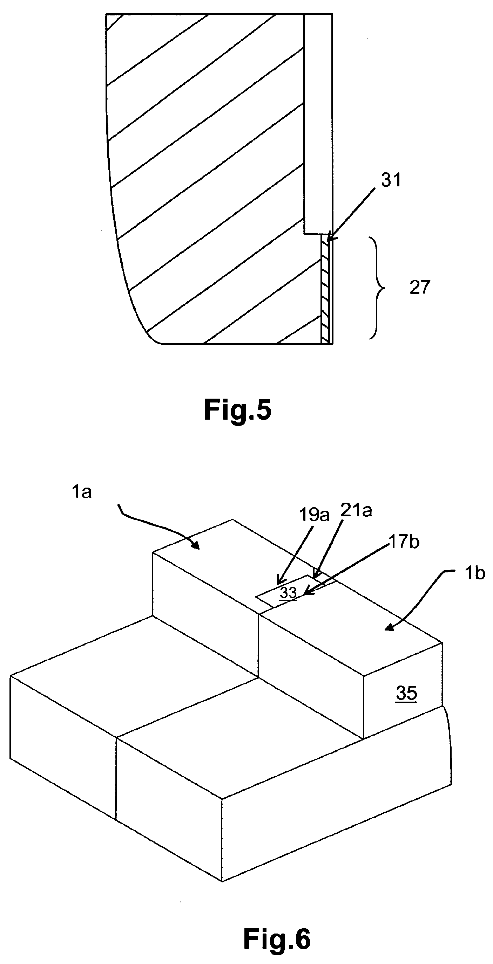

Préférentiellement, la section du canal d'évacuation 27 est partiellement fermée par une cale d'obstruction 31, comme cela est visible à la **figure 5****.** Cette cale d'obstruction 31 s'étend dans la longueur du canal d'évacuation 27. Ainsi, il est possible de régler la section du canal d'évacuation pour éviter toute pénétration de gomme crue dans ce canal lors de la vulcanisation, tout en permettant une évacuation de l'air hors du moule. La cale d'obstruction 31 peut présenter différentes épaisseurs en fonction de la composition de la gomme crue utilisée. On notera également que la cale d'obstruction 31 peut être formée dans le même matériau que l'élément moulant et elle est fixée à cet élément moulant par collage, vissage ou tout autre moyen.

Dans une variante de réalisation non représentée, il est possible que la cale de réglage 25 de la **figure 3** et la cale d'obstruction 31 de la **figure 5** ne forment qu'une seule pièce.

La **figure 6** présente une partie d'un moule de vulcanisation d'une bande de roulement d'un pneumatique. Cette partie de moule comprend un premier élément moulant la et un second élément moulant 1b en contact l'un contre l'autre. Ces éléments moulants forment une cavité 33 de moulage d'un dispositif de fermeture de la section d'une rainure formée par le cordon 35. Plus particulièrement, la cavité 33 est délimitée par des parois appartenant au premier élément moulant 1a, telles qu'une paroi transversale 19a, deux parois longitudinales 21a et une paroi de fond non visible ici. La cavité 33 est également délimitée par une surface de contact 17b appartenant au second élément moulant 1b. On notera que la largeur de la cavité 33 est comprise entre 0,1 mm et 2 mm.

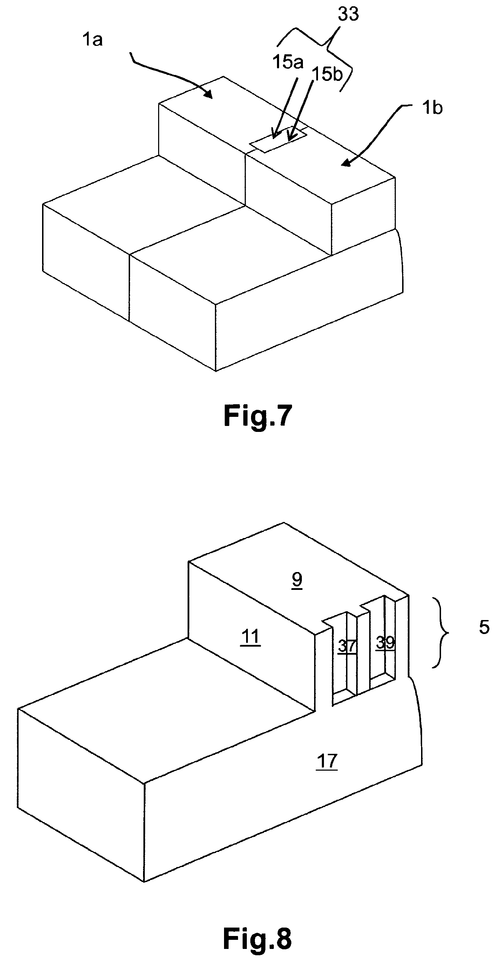

La **figure 7** présente une variante de réalisation dans laquelle la cavité 33 du moule est formée par deux renfoncements 15a et 15b appartenant chacun à deux éléments moulants différents 1a et 1b.

La **figure 8** présente une variante de réalisation d'un élément moulant 1 comportant deux renfoncements 37, 39. Chacune de ces renfoncements débouche sur la face supérieure 9 du cordon 5 et sur le bord de contact 17 de l'élément moulant. Aucune de ces renfoncements ne débouche sur les faces longitudinales 11 du cordon. Ainsi grâce à l'élément moulant de la **figure 8****,** il est possible de mouler deux dispositifs de fermeture dans une même rainure, chacun de ces dispositifs de fermeture étant apte à obturer une partie de la section transversale de cette rainure. On notera que les deux renfoncements 37, 39 peuvent avoir des dimensions différentes.

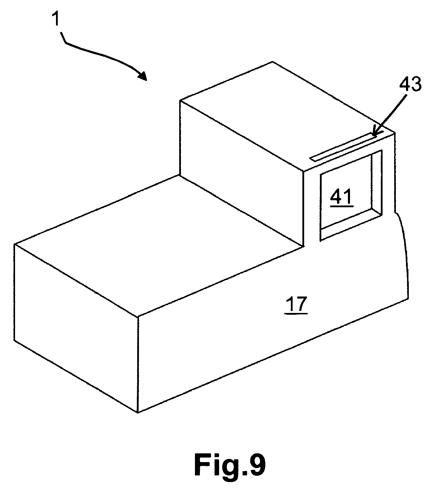

La **figure 9** présente une autre variante de réalisation d'un élément moulant 1. Dans cette variante de réalisation, le renfoncement débouche sur le bord de contact 17 par une ouverture 41 qui est totalement délimitée par l'élément moulant 1 et ce renfoncement débouche sur la face supérieure 9 par un orifice 43 entièrement délimité par cette face supérieure 9. De cette manière, il est possible de fabriquer un dispositif de fermeture ayant à sa base une épaisseur plus faible que le reste du dispositif. On améliore ainsi la flexibilité globale du dispositif de fermeture.

Des pneumatiques moulés par un moule formé à partir de l'assemblage d'éléments moulants tels que décrits ci-dessus, sont réalisés. Ces pneumatiques comportent ainsi des dispositifs de fermeture dans des rainures. On notera que l'utilisation de ces pneumatiques peut être variée (pneumatiques pour véhicule de tourisme, pneumatiques pour poids lourds, pour des roulages hivernaux, sur chaussée humide, etc...).

L'invention n'est pas limitée aux exemples décrits et représentés et diverses modifications peuvent y être apportées sans sortir de son cadre.

## Revendications

1. Moule pour la vulcanisation d'une bande de roulement d'un pneumatique comportant une pluralité d'éléments moulants (1a, 1b), lesdits éléments moulants étant en contact entre eux pour former une surface de moulage apte à mouler une surface de roulement de la bande de roulement du pneumatique et au moins un cordon (35) apte à mouler une rainure dans la bande de roulement, ledit cordon comportant deux faces longitudinales s'étendant dans la longueur du cordon en faisant saillie à partir de la surface de moulage et une face supérieure reliant lesdites faces longitudinales, **caractérisé en ce que** ledit moule comprend au moins une cavité (33) apte à mouler un dispositif de fermeture destiné à fermer tout ou partie d'une section transversale de la rainure moulée par le cordon, ladite cavité débouchant sur la face supérieure du cordon et ne débouchant pas sur les faces longitudinales du cordon **en ce que** la cavité est délimitée par des parois (19a, 21a, 17b) appartenant à deux éléments moulants (1a, 1b) en contact l'un contre l'autre et **en ce que** au moins un desdits éléments moulants (1a, 1b) comporte au moins un renforcement (15,37,39) dans le cordon, ledit renfoncement débouchant sur la face supérieure du cordon et sur un bord de contact de l'élément moulant, ledit renfoncement ne débouchant pas sur les faces longitudinales de ce cordon.

2. Moule selon la revendication 1, **caractérisé en ce que** l'élément moulant comporte dans le cordon un premier renfoncement (37) et un second renfoncement (39), chacun de ces renfoncements débouchant sur la face supérieure du cordon et sur le bord de contact de l'élément moulant, aucune de ces renfoncements ne débouchant sur les faces longitudinales de ce cordon.

3. Moule selon l'une des revendications 1 à 2, **caractérisé en ce que** l'élément moulant comporte un canal d'évacuation d'air (27), ledit canal d'évacuation prolongeant le renfoncement ou chaque renfoncement dans toute l'épaisseur d'une l'embase (3) de l'élément moulant.

4. Moule selon l'une quelconque des revendications 1 à 3, **caractérisé en ce que** l'élément moulant comporte des moyens de réglage (31) des dimensions du canal d'évacuation d'air.

5. Moule selon l'une quelconque des revendications 1 à 4, **caractérisé en ce que** l'élément moulant comprend des moyens de réglage (25) de la hauteur du renfoncement ou de chaque renfoncement dans le cordon.

6. Moule de vulcanisation selon l'une quelconque des revendications 1 à 5, **caractérisé en ce que** la cavité (33) est formée par deux renfoncements (15a, 15b) en vis-à-vis, chaque renfoncement appartenant respectivement à un des deux éléments moulants en contact l'un contre l'autre.

7. Moule de vulcanisation selon l'une quelconque des revendications 1 à 6 **caractérisé en ce que** la cavité (33) comprend un seul renfoncement appartenant à un des deux éléments moulants, ladite cavité étant formée par ledit renfoncement et par un bord de contact (17b) appartenant à l'autre élément moulant, ledit bord de contact fermant ledit renfoncement.

8. Moule de vulcanisation selon l'une quelconque des revendications 1 à 7 **caractérisé en ce que** la largeur de la cavité est comprise entre 0,1 mm et 2 mm.

## Patentansprüche

1. Form für die Vulkanisierung eines Laufstreifens eines Reifens, umfassend eine Vielzahl von formgebenden Elementen (1a, 1b), wobei die formgebenden Elemente miteinander in Kontakt sind, um eine Formfläche zu bilden, die geeignet ist, eine Lauffläche des Laufstreifens des Reifens zu formen, und mindestens einen Wulst (35), der geeignet ist, eine Rille in dem Laufstreifen zu formen, wobei der Wulst zwei Längsflächen, die sich in der Länge des Wulsts erstrecken, indem sie von der Formfläche vorragen, und eine obere Fläche umfasst, die die Längsflächen verbindet, **dadurch gekennzeichnet, dass** die Form mindestens einen Hohlraum (33) umfasst, der geeignet ist, eine Schließvorrichtung zu formen, die dazu bestimmt ist, den gesamten Querschnitt der durch den Wulst geformten Rille oder einen Teil davon zu verschließen, wobei der Hohlraum zur oberen Fläche des Wulstes hin und nicht zu den Längsflächen des Wulstes hin offen ist, dass der Hohlraum durch Wände (19a, 21a, 17b) begrenzt ist, die zu zwei formgebenden, miteinander in Kontakt stehenden Elementen (1a, 1b) gehören, und dass mindestens eines der formgebenden Elemente (1a, 1b) mindestens eine Vertiefung (15, 37, 39) in dem Wulst hat, wobei die Vertiefung zu der oberen Fläche des Wulstes und zu einem Kontaktrand des formgebenden Elements hin offen ist, wobei die Vertiefung nicht zu den Längsflächen dieses Wulstes hin offen ist.

2. Vulkanisierungsform nach Anspruch 1, **dadurch gekennzeichnet, dass** das formgebende Element eine erste Vertiefung (37) und eine zweite Vertiefung (39) in dem Wulst umfasst, wobei jede dieser Vertiefungen zur oberen Fläche des Wulstes und zum Kontaktrand des formgebenden Elements hin offen ist und keine dieser Vertiefungen zu den Längsflächen des Wulstes hin offen ist.

3. Vulkanisierungsform nach einem der Ansprüche 1 bis 2, **dadurch gekennzeichnet, dass** das formgebende Element einen Abluftkanal (27) umfasst, wobei der Abluftkanal die Vertiefung oder jede Vertiefung in der gesamten Dicke einer Basis (3) des formgebenden Elements fortsetzt.

4. Vulkanisierungsform nach einem der Ansprüche 1 bis 3, **dadurch gekennzeichnet, dass** das formgebende Element Mittel (31) zum Einstellen der Abmessungen des Abluftkanals umfasst.

5. Vulkanisierungsform nach einem der Ansprüche 1 bis 4, **dadurch gekennzeichnet, dass** das formgebende Element Mittel (25) zum Einstellen der Höhe der Vertiefung oder jeder Vertiefung im Wulst umfasst.

6. Vulkanisierungsform nach einem der Ansprüche 1 bis 5, **dadurch gekennzeichnet, dass** der Hohlraum (33) durch zwei gegenüberliegende Vertiefungen (15a, 15b) gebildet ist, wobei jede Vertiefung jeweils zu einem der beiden formgebenden Elemente, die miteinander in Kontakt stehen, gehört.

7. Vulkanisierungsform nach einem der Ansprüche 1 bis 6, **dadurch gekennzeichnet, dass** der Hohlraum (33) eine einzige Vertiefung umfasst, die zu einem der beiden formgebenden Elemente gehört, wobei der Hohlraum durch die Vertiefung und durch einen Kontaktrand (17b) gebildet ist, der zu dem anderen formgebenden Element gehört und die Vertiefung verschließt.

8. Vulkanisierungsform nach einem der Ansprüche 1 bis 7, **dadurch gekennzeichnet, dass** die Breite des Hohlraums zwischen 0,1 mm und 2 mm beträgt.

## Claims

1. Mould for vulcanizing a tread of a tyre, comprising a plurality of moulding elements (1a, 1b), the said moulding elements being in contact with one another to form a moulding surface able to mould a tread surface of the tread of the tyre and at least one bar (35) able to mould a groove in the tread, the said bar comprising two longitudinal faces extending along the length of the bar and projecting from the moulding surface and an upper face connecting the said longitudinal faces, **characterized in that** the said mould comprises at least one cavity (33) able to mould a closure device intended to close all or part of a cross section of the groove moulded by the bar, the said cavity opening onto the upper face of the bar and not opening onto the longitudinal faces of the bar, **in that** the cavity is delimited by walls (19a, 21a, 17b) belonging to two moulding elements (1a, 1b) in contact with one another and **in that** at least one of the said moulding elements is a moulding element comprises at least one recess (15, 37, 39) in the bar, the said recess opening onto the upper face of the bar and onto a contact edge of the moulding element, the said recess not opening onto the longitudinal faces of this bar.

2. Mould according to Claim 1, **characterized in that** the moulding element comprises in the bar a first recess (37) and a second recess (39), each of these recesses opening onto the upper face of the bar and onto the contact edge of the moulding element, neither one of these recesses opening onto the longitudinal faces of this bar.

3. Mould according to either one of Claims 1 and 2, **characterized in that** the moulding element comprises an air discharge duct (27), the said discharge duct extending the recess or each recess throughout the thickness of a base (3) of the moulding element.

4. Mould according to any one of Claims 1 to 3, **characterized in that** the moulding element comprises means (31) of adjusting the dimensions of the air discharge duct.

5. Mould according to any one of Claims 1 to 4, **characterized in that** the moulding element comprises means (25) of adjusting the height of the recess or of each recess in the bar.

6. Vulcanizing mould according to any one of Claims 1 to 5, **characterized in that** the cavity (33) is formed by two recesses (15a, 15b) facing one another, each recess respectively belonging to one of the two moulding elements in contact with one another.

7. Vulcanizing mould according to any one of Claims 1 to 6, **characterized in that** the cavity (33) comprises just one recess belonging to one of the two moulding elements, the said cavity being formed by the said recess and by a contact edge (17b) belonging to the other moulding element, the said contact edge closing the said recess.

8. Vulcanizing mould according to any one of Claims 1 to 7, **characterized in that** the width of the cavity is comprised between 0.1 mm and 2 mm.
